# EUROPEAN PATENT SPECIFICATION

(11) **EP 3 675 504 B1**
(45) Date of publication and mention of the grant of the patent: **20.05.2026**
(21) Application number: 19220170.5
(22) Date of filing: 31.12.2019
(51) Int. Cl.: H04N 21/234, H04N 21/41, H04N 21/44, H04N 21/236, H04N 21/434, G06V 20/40

(54) **ENVIRONMENTAL DATA FOR MEDIA CONTENT**
UMGEBUNGSDATEN FÜR MEDIENINHALT
DONNÉES ENVIRONNEMENTALES POUR CONTENU MULTIMÉDIA

(30) Priority: 31.12.2018 US 201816237235
(43) Date of publication of application: 01.07.2020
(73) Proprietor: Comcast Cable Communications, LLC, Philadelphia, PA 19103 (US)
(72) Inventor: Wolcott, Larry, Philadelphia, PA Pennsylvania 19103 (US); Vella, Zane, Philadelphia, PA Pennsylvania 19103 (US)
(74) Representative: V.O.

(56) References cited:
- WO-A1-2017/173976
- GB-A- 2 464 123
- US-A1- 2004 015 983
- US-A1- 2010 262 336
- US-A1- 2011 125 790
- US-A1- 2013 166 777
- US-A1- 2017 083 770

## Description

### BACKGROUND

Media content commonly provides an audio-visual experience. A home theater environment may be utilized for the playback of media content via a display (such as a television) and a speaker system. A variety of homes include a home automation system. Home automation systems typically allow a user to control a variety of devices such as lighting fixtures, alarm systems, and thermostats.

US 2004/015983 A1 discloses a method and system for synchronizing environmental modifiers with the video and audio components of television programs to produce sensual representations or simulations of suggested environment or actions. The system includes a central device in the viewing household that receives the control data for the environmental modifiers. The device receives the control signals from any available source and sends the proper control data or signals to the associated peripherals or components.

### SUMMARY

The claimed invention proposes a method with the features of claim 1 and corresponding computing device, computer-readable medium and system. Further advantageous embodiments are disclosed in the dependent claims.

The following summary presents a simplified summary of certain features. The summary is not an extensive overview and is not intended to identify key or critical elements.

Systems, apparatuses, and methods are described for generating environmental data for media content and/or for playback of media content having environmental data. Environmental data may be automatically generated based on audio data and/or video data for a media content item. The audio and/or video data may be analyzed to determine visual and/or auditory cues. Those cues may be mapped to environmental actions performable by various devices to create sound(s) and/or visual events to supplement the playback experience of the media content. These events may be customized based on devices available.

These and other features and advantages are described in greater detail below.

### BRIEF DESCRIPTION OF THE DRAWINGS

Some features are shown by way of example, and not by limitation, in the accompanying drawings. In the drawings, like numerals reference similar elements.
FIG. 1 shows an example communication network.
FIG. 2 shows hardware elements of a computing device.
FIG. 3A is a flow chart showing an example method for generating environmental metadata.
FIG. 3B shows an example video histogram.
FIG. 3C shows an example of audio peak data.
FIG. 4 shows an example of an environmental data element.
FIG. 5 is a flow chart showing an example method for sending content items.
FIG. 6 is a flow chart showing an example method for the playback of content having environmental metadata.
FIG. 7 is a flow chart showing an example method for determining available environmental devices.
FIG. 8 shows an example data table indicating capabilities of detected environmental devices.

### DETAILED DESCRIPTION

The accompanying drawings, which form a part hereof, show examples of the disclosure. It is to be understood that the examples shown in the drawings and/or discussed herein are non-exclusive and that there are other examples of how the disclosure may be practiced.

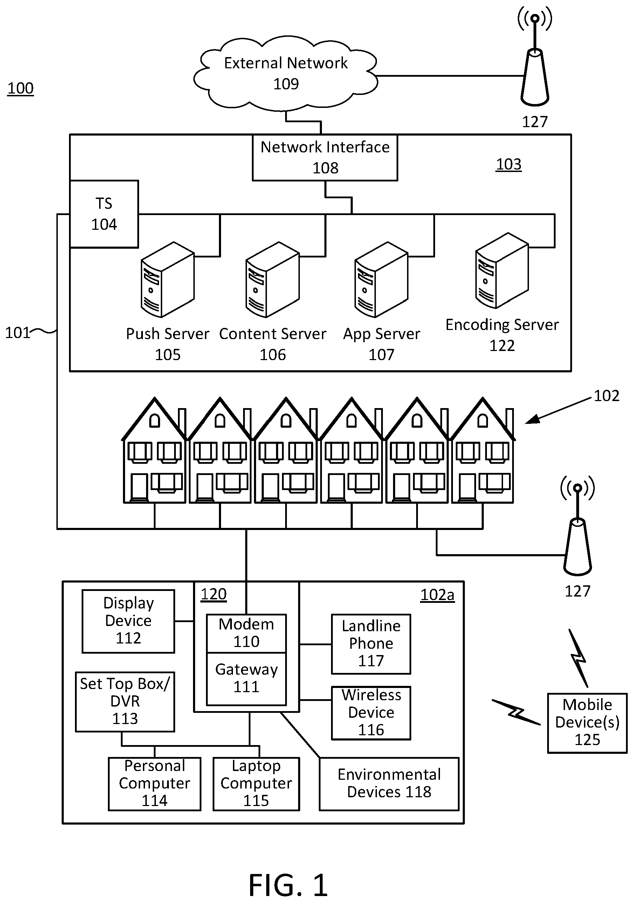

FIG. 1 shows an example communication network 100 in which features described herein may be implemented. The communication network 100 may comprise one or more information distribution networks of any type, such as, without limitation, a telephone network, a wireless network (e.g., an LTE network, a 5G network, a WiFi IEEE 802.11 network, a WiMAX network, a satellite network, and/or any other network for wireless communication), an optical fiber network, a coaxial cable network, and/or a hybrid fiber/coax distribution network. The communication network 100 may use a series of interconnected communication links 101 (e.g., coaxial cables, optical fibers, wireless links, etc.) to connect multiple premises 102 (e.g., businesses, homes, consumer dwellings, train stations, airports, etc.) to a local office 103 (e.g., a headend). The local office 103 may send downstream information signals and receive upstream information signals via the communication links 101. Each of the premises 102 may comprise devices, described below, to receive, send, and/or otherwise process those signals and information contained therein.

The communication links 101 may originate from the local office 103 and may comprise components not illustrated, such as splitters, filters, amplifiers, etc., to help convey signals clearly. The communication links 101 may be coupled to one or more wireless access points 127 configured to communicate with one or more mobile devices 125 via one or more wireless networks. The mobile devices 125 may comprise smart phones, tablets or laptop computers with wireless transceivers, tablets or laptop computers communicatively coupled to other devices with wireless transceivers, and/or any other type of device configured to communicate via a wireless network.

The local office 103 may comprise an interface 104, such as a termination system (TS). The interface 104 may comprise a cable modem termination system (CMTS) and/or other computing device(s) configured to send information downstream to, and to receive information upstream from, devices communicating with the local office 103 via the communications links 101. The interface 104 may be configured to manage communications among those devices, to manage communications between those devices and backend devices such as servers 105-107 and 122, and/or to manage communications between those devices and one or more external networks 109. The local office 103 may comprise one or more network interfaces 108 that comprise circuitry needed to communicate via the external networks 109. The external networks 109 may comprise networks of Internet devices, telephone networks, wireless networks, wireless networks, fiber optic networks, and/or any other desired network. The local office 103 may also or alternatively communicate with the mobile devices 125 via the interface 108 and one or more of the external networks 109, e.g., via one or more of the wireless access points 127.

The encoding server 122 may receive raw content and/or encoded content and analyze audio data and/or video data within the content to identify features within the audio data and/or video data. The encoding server 122 may utilize these features to encode one or more environment data streams associating the identified features to actions performed by one or more environmental devices. The encoding server 122 may also encode the video data and/or audio data and may generate encoded content including the encoded video data, audio data, and environmental data streams. The push server 105 may be configured to generate push notifications to deliver information to devices in the premises 102 and/or to the mobile devices 125. The content server 106 may be configured to provide content to devices in the premises 102 and/or to the mobile devices 125. This content may comprise, for example, video, audio, environmental data, text, web pages, images, files, etc. The content server 106 (or, alternatively, an authentication server) may comprise software to validate user identities and entitlements, to locate and retrieve requested content, and/or to initiate delivery (e.g., streaming) of the content. The application server 107 may be configured to offer any desired service. For example, an application server may be responsible for collecting, and generating a download of, information for electronic program guide listings. Another application server may be responsible for monitoring user viewing habits and collecting information from that monitoring for use in selecting advertisements. Yet another application server may be responsible for formatting and inserting advertisements in a video stream being transmitted to devices in the premises 102 and/or to the mobile devices 125. The local office 103 may comprise additional servers, such as the encoding server 122 (described herein), additional push, content, and/or application servers, and/or other types of servers. Although shown separately, the push server 105, the content server 106, the application server 107, the encoding server 122, and/or other server(s) may be combined. The servers 105, 106, 107, and 122, and/or other servers, may be computing devices and may comprise memory storing data and also storing computer executable instructions that, when executed by one or more processors, cause the server(s) to perform steps described herein.

An example premises 102a may comprise an interface 120. The interface 120 may comprise circuitry used to communicate via the communication links 101. The interface 120 may comprise a modem 110, which may comprise transmitters and receivers used to communicate via the communication links 101 with the local office 103. The modem 110 may comprise, for example, a coaxial cable modem (for coaxial cable lines of the communication links 101), a fiber interface node (for fiber optic lines of the communication links 101), twisted-pair telephone modem, a wireless transceiver, and/or any other desired modem device. One modem is shown in FIG. 1, but a plurality of modems operating in parallel may be implemented within the interface 120. The interface 120 may comprise a gateway 111. The modem 110 may be connected to, or be a part of, the gateway 111. The gateway 111 may be a computing device that communicates with the modem(s) 110 to allow one or more other devices in the premises 102a to communicate with the local office 103 and/or with other devices beyond the local office 103 (e.g., via the local office 103 and the external network(s) 109). The gateway 111 may comprise a set-top box (STB), digital video recorder (DVR), a digital transport adapter (DTA), a computer server, and/or any other desired computing device.

The gateway 111 may also comprise one or more local network interfaces to communicate, via one or more local networks, with devices in the premises 102a. Such devices may comprise, e.g., display devices 112 (e.g., televisions), STBs or DVRs 113, personal computers 114, laptop computers 115, wireless devices 116 (e.g., wireless routers, wireless laptops, notebooks, tablets and netbooks, cordless phones (e.g., Digital Enhanced Cordless Telephone-DECT phones), mobile phones, mobile televisions, personal digital assistants (PDA)), landline phones 117 (e.g., Voice over Internet Protocol-VoIP phones), environmental devices 118, and any other desired devices. Example types of local networks comprise Multimedia Over Coax Alliance (MoCA) networks, Ethernet networks, networks communicating via Universal Serial Bus (USB) interfaces, wireless networks (e.g., IEEE 802.11, IEEE 802.15, Bluetooth), networks communicating via in-premises power lines, and others. The lines connecting the interface 120 with the other devices in the premises 102a may represent wired or wireless connections, as may be appropriate for the type of local network used. One or more of the devices at the premises 102a may be configured to provide wireless communications channels (e.g., IEEE 802.11 channels) to communicate with one or more of the mobile devices 125, which may be on- or off-premises. Environmental devices 118 may comprise any devices located within an environment, including but not limited to lighting systems, HVAC systems, thermostats, vibration devices such as vibrating furniture, alarms, and mobile devices 125.

The mobile devices 125, one or more of the devices in the premises 102a, and/or other devices may receive, store, output, and/or otherwise use assets. An asset may comprise a video, a game, one or more images, software, audio, text, webpage(s), and/or other content.

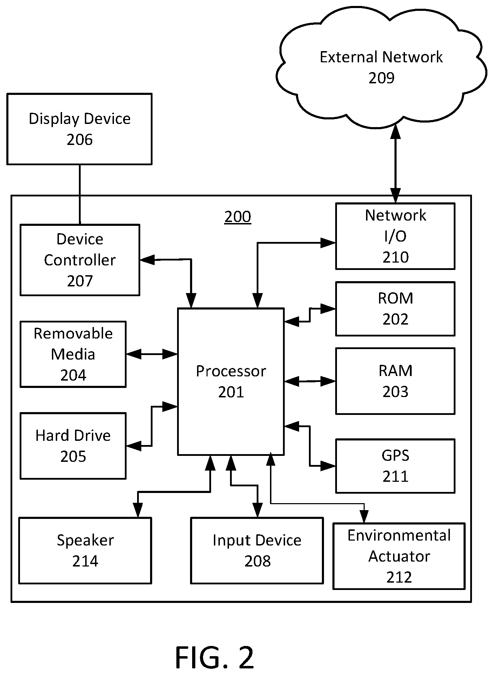

FIG. 2 shows hardware elements of a computing device 200 that may be used to implement any of the computing devices shown in FIG. 1 (e.g., the mobile devices 125, any of the devices shown in the premises 102a, any of the devices shown in the local office 103, any of the wireless access points 127, any devices with the external network 109) and any other computing devices discussed herein. The computing device 200 may comprise one or more processors 201, which may execute instructions of a computer program to perform any of the functions described herein. The instructions may be stored in a read-only memory (ROM) 202, random access memory (RAM) 203, removable media 204 (e.g., a USB drive, a compact disk (CD), a digital versatile disk (DVD)), and/or in any other type of computer-readable medium or memory. Instructions may also be stored in an attached (or internal) hard drive 205 or other types of storage media. The computing device 200 may comprise one or more output devices, such as a display device 206 (e.g., an external television and/or other external or internal display device) and a speaker 214, and may comprise one or more output device controllers 207, such as a video processor. One or more user input devices 208 may comprise a remote control, a keyboard, a mouse, a touch screen (which may be integrated with the display device 206), microphone, etc. The computing device 200 may also comprise one or more network interfaces, such as a network input/output (I/O) interface 210 (e.g., a network card) to communicate with an external network 209. The network I/O interface 210 may be a wired interface (e.g., electrical, RF (via coax), optical (via fiber)), a wireless interface, or a combination of the two. The network I/O interface 210 may comprise a modem configured to communicate via the external network 209. The external network 209 may comprise the communication links 101 discussed above, the external network 109, an in-home network, a network provider's wireless, coaxial, fiber, or hybrid fiber/coaxial distribution system (e.g., a DOCSIS network), or any other desired network. The computing device 200 may comprise a location-detecting device, such as a global positioning system (GPS) microprocessor 211, which may be configured to receive and process global positioning signals and determine, with possible assistance from an external server and antenna, a geographic position of the computing device 200.

A computing device 200 (e.g., an environmental device) may comprise one or more environmental actuators 212 located within an environment. Environmental actuators 212 may comprise one or more devices that may generate sound, light, and/or tactile vibrations, control circuitry for activating, deactivating, and/or controlling various parameters (volume, color, intensity, etc.) of the devices, and/or communication circuitry for sending and receiving data. The environmental actuators 212 may allow for control of one or more systems located within an environment. These systems may comprise any devices located within an environment, including but not limited to lighting systems, HVAC systems, thermostats, vibration devices, alarms, and mobile devices. The environmental actuators 212 may be included in the computing device 200 and/or in communication with the computing device 200 via network I/O interface 209. The environmental actuators 212 may be stand-alone devices, part of a home automation network, and/or connected to a controller device that may issue commands to control the operation of environmental actuators and/or computing devices associated with the controller device.

Although FIG. 2 shows an example hardware configuration, one or more of the elements of the computing device 200 may be implemented as software or a combination of hardware and software. Modifications may be made to add, remove, combine, divide, etc. components of the computing device 200. Additionally, the elements shown in FIG. 2 may be implemented using basic computing devices and components that have been configured to perform operations such as are described herein. For example, a memory of the computing device 200 may store computer-executable instructions that, when executed by the processor 201 and/or one or more other processors of the computing device 200, cause the computing device 200 to perform one, some, or all of the operations described herein. Such memory and processor(s) may also or alternatively be implemented through one or more Integrated Circuits (ICs). An IC may be, for example, a microprocessor that accesses programming instructions or other data stored in a ROM and/or hardwired into the IC. For example, an IC may comprise an Application Specific Integrated Circuit (ASIC) having gates and/or other logic dedicated to the calculations and other operations described herein. An IC may perform some operations based on execution of programming instructions read from ROM or RAM, with other operations hardwired into gates or other logic. Further, an IC may be configured to output image data to a display buffer.

Content items, such as movies, TV shows, on-demand recordings, sports events, video games, etc., may comprise video and/or audio that may represent different events. For example, events may comprise car chases, lightning strikes occurring in a storm, characters walking through a dark forest, and a batter hitting a ball during a baseball game. It should be noted that these events are examples only and that any event occurring in a content item may be used.

For a given type of event, there may be similarities in the video and/or in the audio that represent that event within the content item. Similarities in events may comprise similar characteristics of the data used to generate the video and/or audio output of the part of the content item that comprises the represented event. For example, characteristics of a car chase scene may comprise a relatively static background (e.g., buildings) with one or more moving objects relative to the background (e.g., the cars in the scene) in the video along with audio in a particular frequency range moving from a left audio channel, through a center audio channel, and to a right audio channel (e.g., the engine noise of the cars). For example, characteristics of a lightning strike occurring in a storm may comprise a relatively dark background with a bright white-blue flash of light in a particular portion of the scene (e.g., the lightning bolt) in the video along with a sharp crack in the rear audio channels (e.g., the crack sound corresponding to a lightning strike). For example, a walk through a dark forest may comprise a dark background with a bright spot (e.g., trees illuminated by the moon) with a small moving object (e.g., a person) in the video along with music being played in a minor key (e.g., creepy background music) in the audio. For example, a hit during a baseball game may comprise a brightly colored background (e.g., the stadium) with a quick camera move to the left with a zoom out (e.g., the camera following the path of the baseball) in the video and a sharp snap in the audio (e.g., the sound of a baseball being struck by a baseball bat).

Video and/or audio data for a content item may be processed (e.g., when transcoding from one format to another) to determine features in that data that indicate events represented by the video and/or audio that may be generated based on that data. The determined features may be analyzed to determine various types of actions that may be performed, in conjunction with playback of the content item, by one or more environmental devices, examples of which are described below. A separate track of metadata based on the determined actions may be created. That separate metadata track, or portions thereof, may be provided in connection with the video and/or audio data to a gateway or other computing device and used to control one or more environmental devices during playback of the content item.

Any of a variety of environmental devices may be used to perform actions in conjunction with the playback of a content item. Environmental devices may comprise a processor, one or more actuators, and one or more communication devices capable of communicating via one or more communication channels. The environmental devices may receive data and output one or more actions based on the received data. The action(s) output by an environmental device may comprise tactile outputs, lighting outputs, secondary sound outputs (e.g., sound separate from sound in audio track of content item), secondary visual outputs (e.g., lighting or other visual output separate from video of content item), olfactory outputs, and/or taste outputs. Environmental devices may output light in a variety of colors and/or at a variety of output levels (e.g., at one or more lumen levels.) For example, lighting devices may comprise conventional in-home devices that are controllable (e.g., using smart-home wireless control plugs), devices that can provide ranges of color output and/or intensity (e.g., Phillips HUE), and external devices (e.g., lights outside a premises that can be wirelessly turned on/off). Environmental devices may generate motion, vibration, and/or other tactile outputs. For example, motion devices may comprise chairs and sofas having speakers and/or vibration motors (e.g., X Rocker), vibrating furniture cushions, and furniture having mechanical actuators to lift and/or tilt furniture (e.g., actuators under legs of a couch). Environmental devices may comprise heating and/or cooling devices. For example, heating and cooling devices may comprise a HVAC system dynamically controllable via a smart thermostat and fans which may be turned on, off, and/or have fan motor speed adjusted via a wired and/or wireless connection. Environmental devices may comprise appliances and/or Internet of Things (IoT) IoT devices that can be selectively activated to create the outputs. These devices may comprise home security devices (e.g., alarms, sirens, and/or entry sensors positioned on a door or window), refrigerator, dishwasher, or other appliance(s) with built-in display screen and/or other components that interact with a user, and fireplaces with remote control functionalities. Olfactory devices may include oil vaporizers or other spray devices that can vaporize or spray a scented mixture. Taste devices may include mouth guards or mouth pieces worn in the mouth of a user and output particular tastes (or any other effects, such as vibration and/or lighting effects). The preceding are provided as examples and are not limiting.

The environmental devices may be used to output a variety of effects during output of the content item. For example, during the output of a car chase event, rumble seat/vibrating cushions may be activated to provide a feeling of being in a moving car, actuators in a couch may be activated to tilt the couch in the direction that the car is moving within the video, and/or lighting devices may flash on and off in concert with lights coming in through the windshield of the car. The intensity of the effects may vary based on the intensity of the action occurring within the car chase event. For example, a lightning strike event occurring during a storm may comprise a lighting device flashing a blue light, a vibrating cushion being activated to simulate thunder, and a fan being turned on to simulate wind blowing during the storm. For example, a walk through a dark forest may comprise turning off all of the lighting devices within a room and causing one or more appliances to make startling noises. For example, a hit during a baseball game may comprise vibrating a seat to simulate the cheering of the crowd and flashing lighting devices in a red color corresponding to fireworks being shot in the stadium.

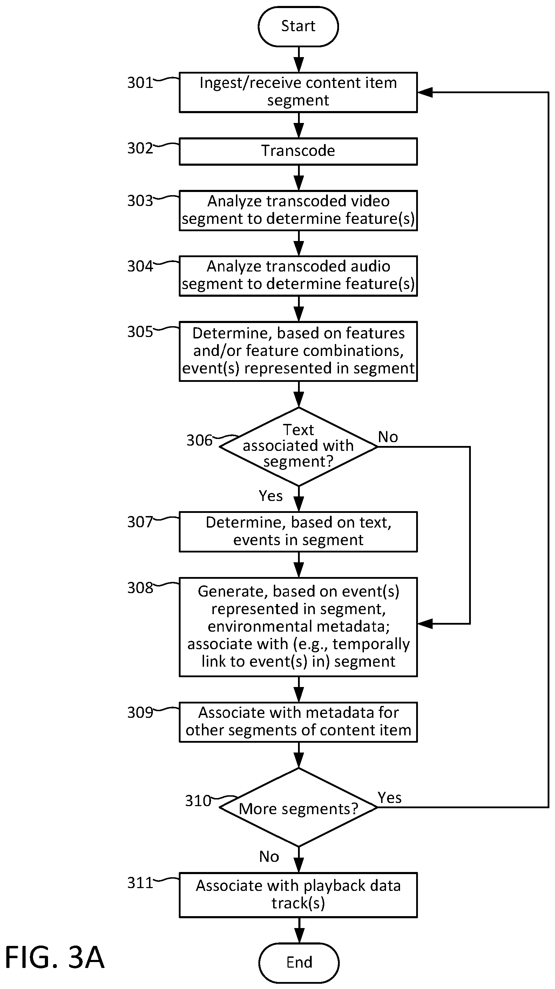

FIG. 3A is flow chart showing example steps of a process that creates environmental metadata for a content item. Some or all of the steps shown in FIG. 3A may be performed in connection with transcoding a content item. The transcoding of the content item and creation of the environmental metadata may be performed in real-time. For example, operations shown in FIG. 3A may be performed as a content item is being transcoded in response to a specific request for that content item, and as transcoded data for that content item and created environmental metadata are provided to a requesting device.

Some or all of the steps shown in FIG. 3A may be performed on a segment-by-segment basis. Segments may comprise portions of a content item corresponding to an arbitrary playback time (e.g., 1 or 2 seconds). Segments may comprise portions of a content item corresponding to a particular collection of successive pictures, such as a MPEG group of pictures (GOP), and/or a logical grouping of successive pictures that comprise a scene or collection of camera shots at a similar location. Steps of FIG. 3A may be performed by one or more servers or other computing devices.

At step 301, a segment of a content item may be received. A segment may be received from any of a variety of data sources, such as a content server 106 and/or local office 103 as described with respect to FIG. 1 and/or one or more other computing devices as described with respect to FIG. 2. The segment may be received from storage or a buffer. Some or all of the content item may been previously received and stored, and receiving the segment may comprise determining the next segment of the content item, from the stored/buffered content item, to be processed. The content item may comprise video data to generate video portion of the content and/or audio data to generate audio portion of the content. A content item may be in any format, such as MPEG-2, HEVC, VP9, AV1, and H.264, and/or compressed. However, these formats are provided by way of example only and any format may be used. The content data may be encoded in a fixed format (such as at a fixed bitrate and/or framerate) or in multiple formats (such as at multiple bitrates and/or framerates).

At step 302, the segment may be transcoded from one format into one or more formats. Transcoding a segment may comprise encoding a segment having unencoded video data and/or transcoding a segment from one video format into a second video format. For example, the segment may be received in a RAW format (such as for events recorded in real time) and encoded using HEVC. A RAW format may comprise data captured directly from an image sensor, such as a file identifier, metadata describing the attributes of the sensor capturing the data (e.g., the size of the sensor, filter information, and/or color profiles), metadata describing the settings used to capture the data (e.g., exposure settings, camera model, lens model, location data, and/or the date and time at which the data was captured), timecodes, keycodes, frame numbers, and/or file sequence numbers, that has not been processed or encoded. For example, an MPEG-2 formatted segment may be transcoded to a H.264 segment. Transcoding may comprise converting audio data from one format to a second format. Audio data may be transcoded to any desired format, such as MP3, AAC, HE-AAC, AC-3, and Opus, and/or compressed. Audio data may be encoded in a fixed format (such as at a fixed bitrate and/or audio format) or in multiple formats (such as at multiple bitrates and/or in a variety of audio formats). These transcodings are provided by way of example only and a segment may be transcoded from one format to any other format.

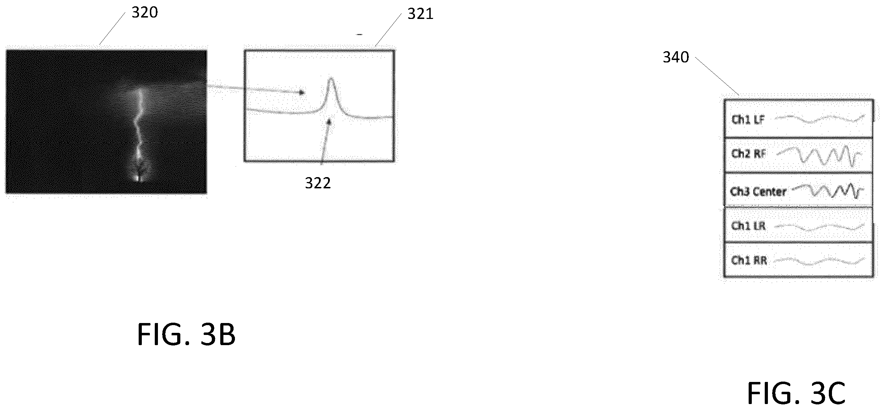

At step 303, the transcoded video data and/or data generated from the transcoding may be analyzed to determine one or more features. A feature may comprise data in, and/or derived from, transcoding a segment and that indicates the presence of one or more phenomena represented in a content item segment video and/or audio. A feature may comprise one or more aspects of a segment corresponding to particular events within the segment. For example, features of a car chase may comprise data indicating roads, cars, drivers sitting in the cars. For example, features of a lightning strike may comprise data indicating a gray sky, a dark background, and a single bright spot within the segment. For example, features of a walk through a dark forest may comprise data indicating an overall dark scene. For example, features of a hit during a baseball game may comprise data indicating a crowd sitting next to a bright green field. Features may be determined based on video histograms, audio analysis, closed caption analysis, and combinations of each of these. Video histograms may be determined during the transcoding of the segment. Video histograms may be determined based on a color buffer and/or a spatial-chromatic histogram generated during the transcoding of a segment. A video histogram may be generated for one or more color channels. A video histogram may indicate one or more colors (e.g., red, blue, green, black, white, etc.) and the intensity of the one or more colors. A video histogram may identify discrete features within the segment. An example of a video histogram for a segment 320 is shown in FIG. 3B. Segment 320 comprises a dark background and a lightning bolt on the right side of the scene. The corresponding video histogram 321 comprises a blue-white color peak 322 in the portion of the video histogram 321 corresponding to the location of the lightning bolt in the segment 320. The intensity of a color may be based on the number of pixels within a particular frame and/or scene having the color. A video histogram may be determined for any color space. A video histogram may provide a chromatic histogram of a portion of the video data. A video histogram may be determined on any portion of a segment, including on a per-scene and/or a per-frame basis. A video histogram may be determined for a particular segment by determining a distribution of the color values for some or all of the pixels within the segment and/or particular frames within the segment. The distribution of color values for particular pixels and pixels adjoining the particular pixels may be used to identify movement patterns within the segment. Features may comprise timing data indicating the point in time during the segment at which the feature occurs. The video timing data may be an absolute time, an offset from a starting time, an offset from a previous feature, or any other timing information.

At step 304, transcoded audio data and/or data generated from the transcoding of the audio data may be analyzed to determine one or more features. For example, features of a lightning strike may comprise audio which is generally quiet with a sudden, loud effect. For example, features of a walk through a dark forest may comprise moody ambient audio, such as the sound of crickets chirping. For example, features of a hit during a baseball game may comprise a sudden noise followed by the cheering of the crowd. Features may be determined based on amplitude peaks occurring within the audio data. Features may also or alternatively be determined based on silences, short silences, explosions, timbre, emotional analysis, and other audio analysis. The features may be used to generate an acoustic signature. For example, a gunshot from a pistol (occurring at subsonic speeds) are discernable from a gunshot from a high-powered rifle (occurring at supersonic speeds) based on unique characteristics within the waveform of the audio feature. Amplitude peaks may be automatically determined during the transcoding of the audio data. An example of amplitude peaks occurring within audio data is shown in FIG. 3C. Audio signals 340 are shown for five channels - left front, right front, center, left rear, and right rear. Each audio signal may comprise a waveform representing the amplitude and frequency for the audio signal to be output on each of the five channels. Amplitude peaks may be in specific frequency ranges. An amplitude peak may be an instantaneous value and/or an average peak value over an arbitrary time period. An instantaneous amplitude peak may correspond to the audio volume for particular frame of video in a segment. An average peak value may correspond to the average audio volume during a segment. Features within the audio data may comprise timing data indicating the point in time during the audio data the feature occurs. The audio timing data may be an absolute time, an offset from a starting time, an offset from a previous feature, or any other timing information.

At step 305, events represented in the content item segment may be determined. The determined events may correspond to the feature(s) determined in steps 303 and 304. Events in a segment may be determined by comparing the determined features to a feature database mapping different features to different events. The feature database may store a set of features along with a set of labels identifying one or more events corresponding to the set of features. For example, a car chase event may comprise features indicating video having a quickly moving object against a still background and audio in a frequency range corresponding to the sound of a running engine. For example, a lightning event may comprise video features indicating a flashing white light against a dark background and audio features which is quiet with a sudden, loud peak in a frequency range corresponding to the sound of a lightning strike followed by a rumbling bass effect corresponding to the sound of thunder. For example, a walk in a dark forest event may comprise video features indicating an overall dim scene and audio features in the frequency range of chirping crickets. For example, a hit in a baseball game event may comprise video features indicating a brightly lit background with a camera motion moving from an initial position to a second position coupled with a zoom out and audio features indicating talking (e.g., the announcer commentary) followed by a sharp crack and audio in the frequency range of a crowd cheering. Determining events may comprise mapping individual features to individual events and/or mapping combinations of features to individual events. For example, feature X with feature Y may indicate event Q, but feature X with feature Z may indicate event R.

The database may be created by manually assigning labels identifying a type of event to one or more features. The mappings may be stored in any format, such as a relational database having columns corresponding to event types and associated features. The database may also include additional metadata indicating one or more keywords associated with the event. The metadata may be used to augment the automatic detection of events. An example database schema is as follows:

| **Event Name** | **Video Feature** | **Audio Feature** | **Metadata** |
|---|---|---|---|
| Car Chase | Data indicating moving car | Data indicating car engine | Driving Scene |
| Lightning Strike | Data indicating dark background with a bright streak | Data indicating sharp crack followed by low rumbling | Weather |
| Walk in a Dark Forest | Data indicating dark background with few discernable features | Data indicating crickets chirping | Ambient Scene |
| Hit in a Baseball Game | Data indicating bright background with a camera move and zoom out | Data indicating sharp crack followed by crowd cheering | Hit, fastball |

The mappings may be created by a user viewing a segment and determining one or more labels for one or more events occurring within the segment. The label(s) determined by the user may be mapped to the features generated for the segment and the mapping of the determined label with the determined features may be stored in the database. The mappings of events to features may be generated using a variety of machine classifiers. Machine classifiers may generate feature vectors for a segment based on the features determined in steps 303 and 304. The feature vectors may comprise labels indicating particular events occurring within the segment generated based on the determined features and a confidence value that the label accurately identifies the event(s) occurring within the segment. For example, a machine classifier may indicate a confidence value of 90% for a feature vector indicating a segment comprises a car chase event based on features indicating video having a quickly moving object and audio in a frequency range corresponding to the sound of a running engine and a confidence value of 10% that the segment indicates a boat chase event as the audio frequency range corresponding to the sound of a car engine may be slightly overlapping with the audio frequency range corresponding to the sound of a boat engine. For example, a confidence value for feature vector indicating a lightning event may be 99% as the specific video features and audio features for a lightning event may be distinct from other weather-related events, such as tornado events and burning building events. For example, a confidence value for a walk in a dark forest may be 40% as the features indicative of a walk in a dark forest may be generally indistinct from other dark scenes with subtle sound effects, such as segments including a swim in a lake at night or exterior shots of a dark building. For example, a confidence value for a feature vector indicating a hit in a baseball game event may be 66% as the features indicating a hit at a baseball game may be similar to other big plays during a baseball game, such as a strikeout event or a foul ball event. The mapping of events to features may be manually verified by a user. The user may verify all labels determined by the machine classifier and/or may verify labels for those having a confidence metric below an arbitrary threshold value, such as 75%. The machine classifiers may be trained using a set of training data comprising a set of labels indicating particular events and a mapping of the labels to a set of features corresponding to each event. The set of training data may be determined by a user viewing segments as described above. The confidence value may be determined based on a similarity between the features in the training data and specific features determined in steps 303 and 304 as described in more detail below.

Various parts of and/or information regarding features may be analyzed to match a particular feature to an event. For example, video features may be analyzed based on color information (e.g., background color information extracted from a frame or other color information representative of the video event). For example, audio features may be analyzed across one or more audio channels based on acoustic energy or power, such as the average level of noise throughout the scene or an amount of change in sound level throughout the scene. The determined features may be processed to facilitate the comparison of the determined features to the database of events. For example, the features may be hashed to generate a unique signature identifying the feature. Any hashing function, such as a Rabin fingerprint, Zobrist hashing, a one-way hash function, tabulation hashing, Pearson hashing, MD5, MD6, SHA-256, or SHA-512, may be utilized. Feature signatures may be stored in the database thereby allowing the determined signature to identify the category of a particular scene. Features may be represented as a signal and vertices within the signal may be identified. The location of the vertices within the signal may be compared to sets of vertices stored in the database to determine one or more events identifying the determined features. A signal may be thought of as a plot on a 2D coordinate system having an x axis and a y axis. Determining vertices within a signal may comprise identifying vector sign changes within the signal by examining y coordinate values of successive points in the signal until a vector sign change is determined. The determination of vector sign changes may continue until the entire signal is processed. For each vector sign change found after the first vector sign change, a distance may be determined, in both the x and y directions, between each vector sign change and the first vector sign change. The number and location of vertices identified for any particular feature may vary based on the specifics of the signal. The set of vertex sign changes and the determined distances may be used to approximate the original signal. The determined vertex sign changes and distances may be compared to a set of vertex sign changes in the database to identifying a matching feature and its corresponding event.

At step 306, it may determined if text is associated with the segment. Text associated with a segment may comprise close captioning data. The text may be comprised in the segment and/or automatically generated using a variety of speech recognition techniques. The content of the text is described with more detail below. The text associated with a segment may be in one or more languages. The languages may be indicated within the text.

At step 307, events in the segment may be determined based on words, combinations of words, and/or parts of speech associated with word(s) within the text. For example, text associated with a car chase may comprise a description of how fast the car is traveling and the presence of cars "on our tail." For example, text associated with a lightning strike may reference weather conditions and comprise an exclamation of surprise near the time of the lightning strike. For example, text associated with a walk in a dark forest may comprise a description of a creepy atmosphere (e.g., in horror or suspense films) or romantic exchanges (e.g., in romance films). For example, text associated with a hit in a baseball game may comprise an identification of the batter and words like "fastball" used as a noun and "swing" used as a verb. The text may be analyzed on a sentence-by-sentence basis and/or by considering a sentence within the context of neighboring sentences and/or the entire text. One or more words within the text may be stemmed or lemmatized to determine the lemma of the word. Stemming a word may comprise determining a root form of a word by stripping a suffix and/or a prefix for a word and/or looking up the word in a lookup table. A lookup table for root forms may comprise a listing of every word in a particular language and its corresponding root form. The root form of a word may or may not correspond to a dictionary word. For example, the words "argue," "argues," and "argus" may reduce to the root form "argu", while the word "kite," "kiting," and "kites" may reduce to the root form "kit." Lemmatizing a word may comprise determining a root form of a word based on its part of speech within a sentence, neighboring sentences, and/or the entire text associated with the segment. For example, the word "meeting" may be a noun (e.g., "at our meeting today") or a verb (e.g., "we are meeting after work") depending on its usage within a sentence. A dictionary and/or a thesaurus may be used to determine the root form of a word based on its context. For example, the word "better" may have the root form "bet" (e.g., "Tom is the next better in the round of poker") or "good" (e.g., "I am doing better today") depending on its usage in a sentence.

At step 308, environmental metadata may be generated based on the events determined in step 305 and/or step 307. Events may be compared to rules that indicate, for each event, effects that may be created, parameters (e.g., duration, intensity, color, etc.) of those effects, the time at which the effect may be created, a delay associated with the effect, and/or the location of the effect. For example, a rule for a car chase event may indicate that a lighting device should flash blue and red (representing the lights of a police car) when a police car is visible during the segment. For example, a rule for a lightning event may comprise flashing a white light for .1 second and vibrating seats for 5 seconds after the white light is flashed. For example, a rule for a walk in a dark forest may comprise turning on a fan (to simulate a breeze in the forest) for 7 seconds at a medium speed. For example, a rule for a hit in a baseball game may comprise vibrating a couch cushion when the audio features exceed a threshold volume, thereby simulating the effect of the stands moving as the crowd jumps up and down.

Rules may indicate priorities among different effects. For example, a rule may specify that effect Y is to be output for event A if the appropriate environmental devices are available for outputting the effect. If the appropriate devices to output effect Y are unavailable, the rule may indicate effect Z should be output as a substitute. For example, a rule for a car chase event may indicate that a lighting device should flash red and blue, but if no lighting device is available to output colored light, the light may flash on and off as a substitute effect. For example, a rule for a lightning event may comprise flashing white light and vibrating seats, but if vibrating seats are not available, a home automation system may be used to cause a vibration in the windows. For example, a rule for a walk in a dark forest may comprise turning on a fan, but if a fan is not available no effect may be output. For example, a rule for a hit in a baseball game may comprise vibrating a seat, but if a vibrating seat is unavailable a low frequency signal may be sent to a subwoofer to play a substitute audio effect to provide the audio effect of the cheering crowd without the tactile output of the vibrating seat.

Rules may indicate that positional parameters should be added that indicate where, in relation to a display device outputting a content item segment, effects should happen. For example, a rule for a car chase event may indicate that a lighting device located behind a likely position of viewers should flash blue and red. For example, a rule for a lightning event may comprise flashing a white light located in front of a likely position of viewers and on the right side of the device outputting the video. For example, a rule for a walk in a dark forest may comprise turning on a ceiling fan located above a likely position of viewers. For example, rule for a scary movie segment may indicate that random startling sound should be created behind a likely position of viewers (e.g., certain distance behind display device). For example, a rule for a battle scene may indicate that light flashes occur in positions corresponding to explosions in scene.

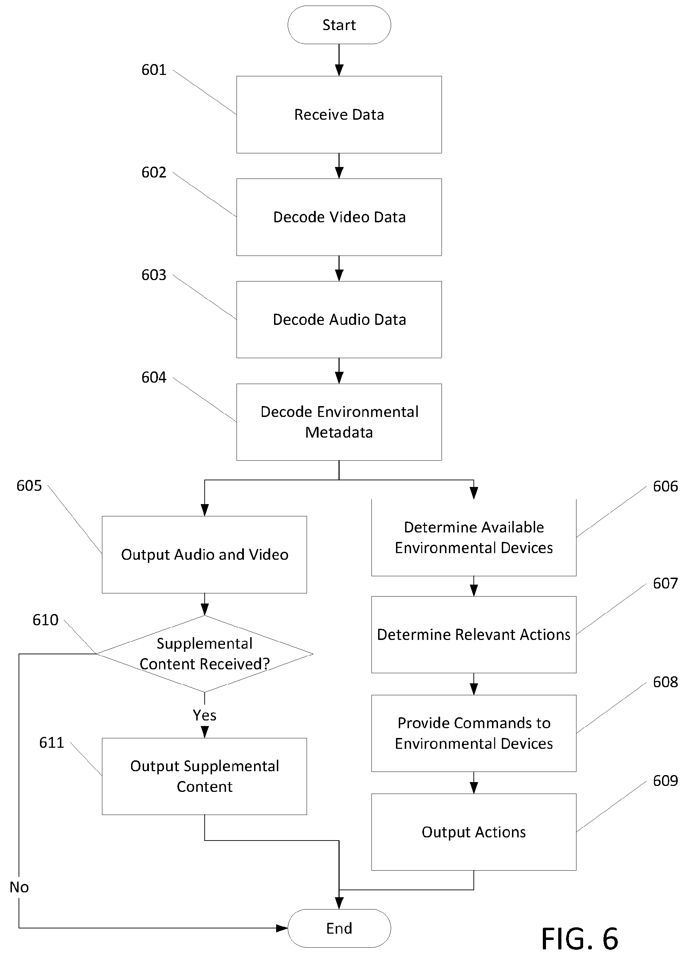

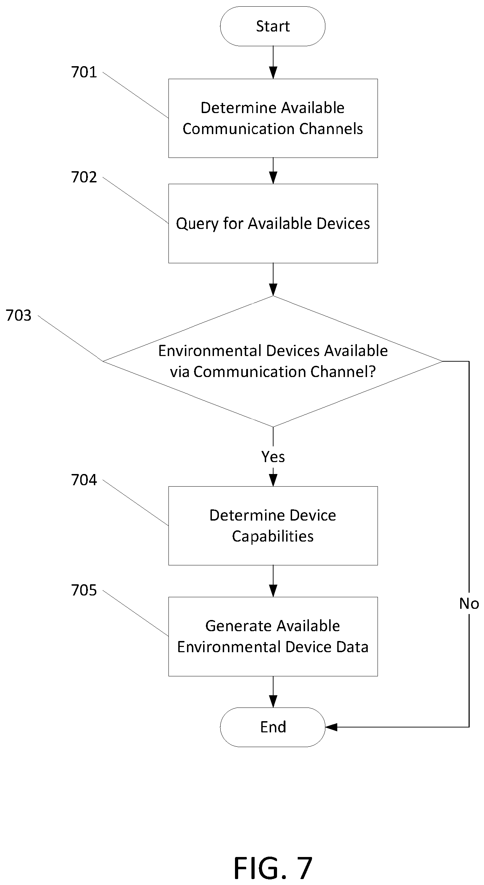

Environmental metadata for any particular segment may comprise a substantial amount of data and some playback systems may be incapable of outputting some or all of the environmental metadata. The environmental metadata may be filtered before sending to computing devices, such as gateways, for processing and output. Additionally, devices associated with a particular gateway may ignore data that cannot be used. Techniques for filtering environmental metadata and determining available environmental devices are described in more detail below with respect to FIG. 6 and FIG. 7.

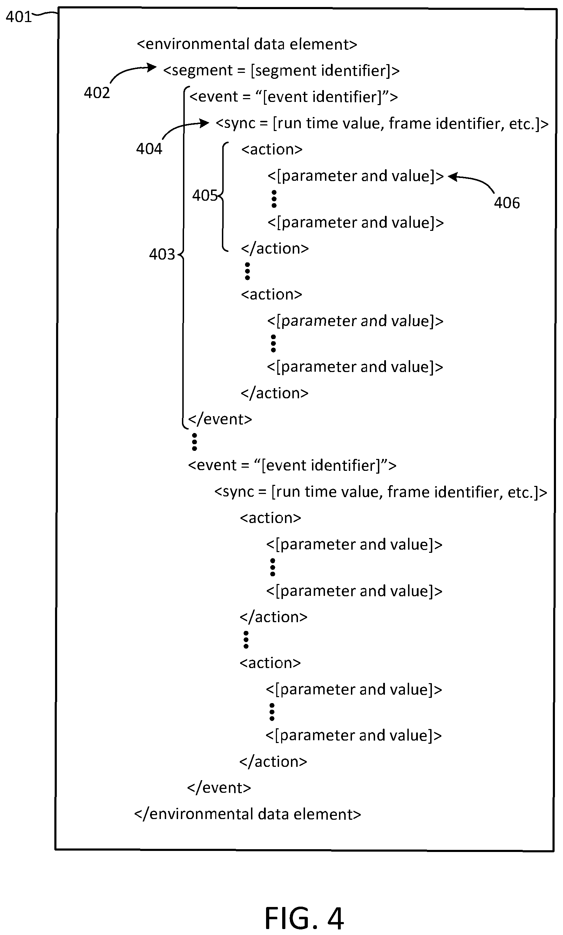

FIG. 4 shows an example environmental metadata element 401. Data items in element 401 are merely examples and other names may be used, the ordering of data items may be rearranged, additional data items added, particular data items omitted, etc. Item 402 comprises data that associates the environmental metadata element 401 with a particular segment. A segment may be identified using a segment identifier, shown generically in FIG. 4 as "[segment identifier]." A segment identifier may be an identifier from manifest of segments, a URI of the segment, a time offset from the start time of a content item, a description of the scene, a relative offset from a previous segment, or any other identifier.

An environmental metadata element may comprise zero (e.g., if no events mapped to features), one, or multiple event subelements, such as subelement 403. An event subelement may comprise an identifier, shown generically in FIG. 4 as "[event identifier]." The event identifier may comprise descriptive language and/or other information to identify the event type. An event subelement may comprise a synchronization data element 404 that indicates a part of the media content item segment associated with the event. The synchronization data may be a runtime (e.g., .01 seconds) of the segment when the event begins, may be an indicator of one or more frames in the segments when the event begins, and/or any other type of information to indication a specific part of the segment. Depending on segment length and granularity of event mapping, segment identifier 402 may not be enough to accurately locate an event in a segment.

An event subelement may comprise zero, one, or multiple action subelements 405. An action subelement may comprise zero, one, or multiple data elements 406 indicating a type of action and zero, one, or more details related to the action. An action subelement may comprise a parameter and a value. The parameters and values may indicate an identifier for the action, a type of device, a type of output for the device, alternative devices if the first device is not present, characteristics of the output (e.g., duration, intensity, color, sound frequency, temperature, etc.), a location of the action (e.g., relative to a front of a display screen used to output the content item segment and/or behind a likely position of viewers), priority information (e.g., only perform action if other actions cannot be performed), and any other information. For example, lighting devices may be turned on to a specific brightness value and/or a specific color value. The brightness and/or color of the light created by the lighting device may be based on one or more action subelements. For example, vibration devices may vary their intensity based on one or more action subelements, with a lower sound frequency causing a stronger output to be generated by the vibration device. For example, alarm devices may be activated to cause an audible and/or visual alarm based on an action subelement indicating that the alarm device should be activated based on a vibrating seat not being present in the likely viewing area. For example, environmental metadata for a car chase event may comprise action subelements that cause a lighting device to alternately flash blue and red in .3 second bursts. For example, environmental metadata for a lightning event may comprise an action subelement flashing a white light located in front of a likely position of viewers and on the right side of the device outputting the video for .1 seconds at 100% intensity. For example, environmental metadata for a walk in a dark forest may comprise an action subelement for turning on a ceiling fan located above a likely position of viewers at a medium speed. For example, environmental metadata for a hit in a baseball game event may comprise an action subelement for flashing a lighting device red and an action subelement for vibrating a couch at 20% intensity.

At step 309, the environmental metadata element generated in 308 may be associated with other environmental metadata elements generated for other segments of the content item. Associating environmental metadata elements may comprise storing the environmental metadata element with other environmental metadata elements generated for other segments in the content item. Associating environmental metadata elements may comprise generating separate data linking each environmental metadata elements with the other environmental metadata element. This linking may be performed using a variety of data structures, such as a data table with URIs for multiple environmental metadata elements and/or a linking element in the environmental metadata that comprises an identifier of the next metadata element to create a linked list of environmental data elements.

At step 310, it may be determined if there are more segments of the content item to process. If more segments are to be processed, step 301 and/or one or more subsequent steps may be repeated. If all segments have been processed, step 311 may be performed.

At step 311, a metadata track, comprising the environmental metadata elements generated for segments of the content item, may be associated with the transcoded video and/or audio data for the segments of the content item. The metadata track along with the associated transcoded video and/or audio data may be stored in the same location. For example, the data may be stored using a content server, such as the content server 106 described in FIG. 1. Additional data to the metadata track and/or to the transcoded content item segments may be added to link the data together. For example, the additional data may comprise generating and/or updating tables indicating where transcoded video and/or audio data is stored (e.g., URIs for segments) and where a metadata track is stored (e.g., URIs for environmental metadata elements). One metadata track may be associated with multiple transcodings of a content item. For example, a metadata track generated during a HD transcoding of a content item could also be linked (or otherwise used) for a SD transcoding of the content item.

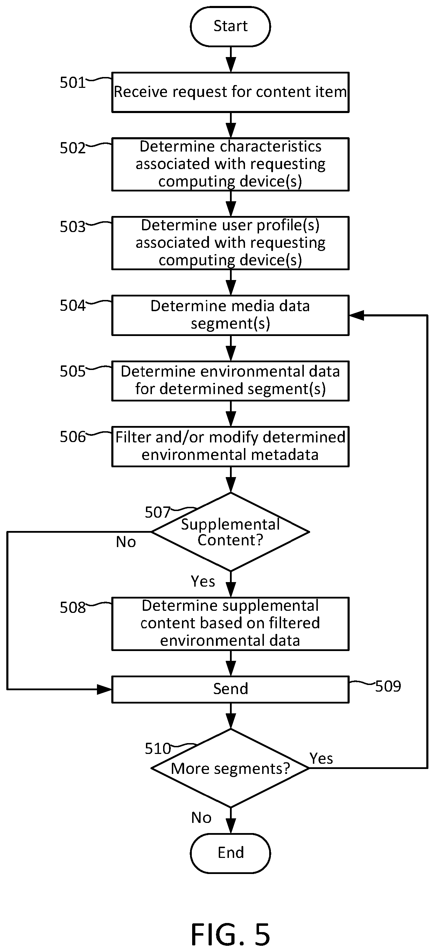

A metadata track for a version of a content item may be provided with the content item to a computing device associated with a user (e.g., a gateway at a user premises). FIG. 5 is a flow chart showing steps of an example method of providing a content item and associated environmental metadata. Steps of FIG. 5 may be performed by one or more servers or other computing devices. One or more of the steps of method shown in FIG. 5 may be performed by one or more devices performing one or more of the steps of the method shown in FIG 3.

At step 501, a request for a content item may be received. The request may be a real-time transport protocol (RTP) request. The request may be generated by a computing device (e.g., a gateway). The request may be made in response to a selection of a particular service (e.g., a TV "channel"). The request may be a request join to an IP multicast group. A multicast request may be a request to add an identifier indicating the computing device (e.g., an IP address of the computing device) to a group of destination computing devices for the IP multicast. The multicast request may be a IGMP join message. The request may be an IP unicast request. A unicast request may be a request from a computing device to provide a particular content item to only the computing device and/or provided separately from other computing devices.

At step 502, characteristics of the computing device(s) associated with request may be determined. The computing device(s) associated with the request may be the computing device (e.g., gateway) that sent the request or other computing device. The characteristics may indicate what devices (e.g., type and/or specific model) are associated with the requesting device and/or are available to perform actions that may be indicated in the environmental metadata for the requested content item. The characteristics may be obtained from a database maintained by a gateway, such as those described in connection with FIG. 6 and FIG. 7 below. The characteristics may be provided with the request and/or obtained after the request has been received. For example, the computing device performing the method of FIG. 5 may send a request for the characteristics from the requesting computing device. For example, the computing device performing the method of FIG. 5 may maintain a database of computing devices and their characteristics and match the requesting computing device based on any of a variety of criteria, such as MAC address, to identifiers stored in the database to identify characteristics for the requesting computing device.

At step 503, user profiles of one or more users associated with request and/or with computing devices associated with request may be determined. A user profile may comprise user preferences, parental controls, information indicating that some actions should (or should not) be performed, and/or information indicating some actions should be performed in a certain way. The user profiles may be obtained from database maintained by a computing device, such as those described in connection with FIG. 6 and FIG. 7. The user profiles may be provided with the request and/or obtained after the request is received. For example, the computing device performing method of FIG. 5 may send a request for user profiles to the requesting computing device.

At step 504, media data for segment(s) of the content item to send to requesting device may be determined. For example, the requesting computing device may have been provided with a manifest for the content item indicating a set of segments and a set of identifiers for each segment, and the request of step 501 may comprise one or more identifiers identifying the particular segment(s) to send. For example, a computing device may maintain a database of requesting computing devices, the content items requested by the requesting computing device, and a set of segments previously provided (or to be provided) to the requesting computing device. The computing device may use the database to determine the next segment to be provided to the requesting computing device. The computing device may add (or subtract) the indicator of the segment to be sent to the database so that the computing device maintains an accurate record of segments provided (or to be provided) to the requesting computing device in the database.

At step 505, the environmental metadata elements that are associated with the segments, for which media data was determined in step 504, may be determined. The association of the environmental metadata with the segments may have been created and associated as described with respect to FIG. 3A.

At step 506, environmental metadata elements determined in step 505 may be filtered and/or modified based on characteristics and profiles determined in step 502 and step 503. For example, action subelements in the environmental metadata may indicate a lighting device which is unavailable to the requesting computing device and those action subelements may be deleted from the environmental metadata elements. For example, an action subelement in the environmental metadata may indicate a lighting device to output light of alternating colors and the characteristics may indicate that only white lighting devices are available, and the action subelement may be modified from alternating colors to turning the lighting device on and off to simulate the intended flashing effect. For example, action subelements may indicate that a vibrating seat should be activated at 100% intensity and a user preference may limit the maximum intensity of a vibration effect to 50%, so the computing device may modify the action subelement from 100% intensity to 50% intensity based on the user preference. For example, an action subelement may indicate an alarm sound to be generated by an alarm device and a user preference may indicate alarm sounds should be substituted with a flashing light effect from a lighting device, and the environmental metadata elements may be modified to replace the alarm action subelements with lighting action subelements. The filtering and/or modification of the environmental metadata elements may be compounded. For example, an action subelement may call for action X to be performed by device Y, the characteristics may call for action X to be performed by device Z, and a profile may indicate that action A should be performed instead of action X. Accordingly, the action subelement may be modified such that action X is performed by device Z as specified in the characteristics and profile.

At step 507, a determination may be made if supplemental content should be sent. Supplemental content may comprise an advertisement and/or other types of content. Supplemental content may be interactive, e.g., an instruction to cause a voice-enabled virtual assistant (e.g., Alexa, Siri, and/or Google Assistant) to ask a user if he or she is interested in a product. The determination of step 507 may be based on the most recently determined segment of media content. For example, if a particular segment of a content item preceding an advertisement insertion point was determined in the most recent performance of step 504, it may be determined that a supplemental content item in the form of an advertisement should be sent. The determination may be based on a counter, e.g., a count of the number of segments sent since a previous sending of supplemental content and/or the time since the since a previous sending of supplemental content. If a determination is made in step 507 that supplemental content should be sent, step 508 may be performed. If a determination is made in step 507 that supplemental content should not be sent, step 509 may be performed.

At step 508, supplemental content items to send may be determined. The determination of one or more supplemental content items to send may be based on the filtered environmental data determined in step 506 (and/or in previous performances of step 506). For example, if the filtered metadata shows no devices able to perform certain actions or only able to perform limited parts of certain actions, an advertisement for particular environmental devices may be sent to encourage the user to add additional devices to the environment. For example, if an action subelement indicated by the filtered metadata calls for lowering the temperature of the environment, an advertisement may be sent for a tropical vacation. For example, if the environmental metadata indicates a car chase event, an advertisement for a professional driving school may be sent. For example, if the environmental metadata indicates multiple events associated with a sporting event, an advertisement for the corresponding local sports team may be sent.

At step 509, media data for the content item segment(s) determined in step 504, the filtered metadata determined in step 506, and/or the supplemental content determined in step 508 (if applicable) may be sent to requesting computing device. The data may be sent as a single set of data and/or as separate data streams. For example, the data may be sent by separate IP packets for media data, for environmental metadata, and for supplemental content. The data may be sent as different MPEG streams. The data may be sent via different communication channels and/or using different protocols. For example, the media data may be sent via an IP multicast group with the filtered metadata and/or supplemental content being sent via a unicast transmission. For example, the media data may be sent via RTP and the filtered metadata and/or supplemental content may be sent via HTTP.

At step 510, it may be determined if more segments of content item should be sent. For example, if the requested content item comprises a movie and the movie not over, additional segments of the movie should be sent. For example, a computing device may send a request for content items and the computing device providing the content items will continue sending content items until the requesting computing device sends a request to cease transmission. For example, a computing device may request content on a particular TV channel and the sending computing device may continue to send content items for the TV channel until the requesting computing device is turned off or changes to a different TV channel. For example, more content items may be sent if a second request from the computing device requesting additional segments has been received. If more segments should be sent, step 504 and/or subsequent steps may be repeated.

A gateway, such as the gateway 111 described with respect to FIG. 1, may be configured to detect, enroll, manage, and/or signal of environmental actuators and/or computing devices. FIG. 6 is a flow chart showing an example method for the playback of multimedia content having environmental metadata. Steps of example method 600 may be performed by a gateway and/or by one or more other computing devices.

At step 601, data may be received. The data may comprise media data (including video data and/or audio data) for content item segment(s) determined in step 504, the filtered environmental metadata determined in step 506, and/or the supplemental content determined in step 508 (if applicable) requested by the computing device performing the steps of FIG. 6. The data may be received from any of a variety of data sources, such as a content server 106 and/or local office 103 as described with respect to FIG. 1 and/or one or more other computing devices as described with respect to FIG. 2, or any of the computing devices performing the steps of FIG. 5.

At step 602, video data may be decoded. At step 603, audio data may be decoded. At step 604, environmental metadata may be decoded. The video data, audio data, and/or environmental metadata may be decoded serially and/or in parallel. The video data, audio data, and/or environmental metadata may be decoded using a decoder capable of decoding fixed bitrate data, fixed framerate data, and/or any other data encoding utilized to encode and/or transcode the video data, audio data, and/or environmental metadata.

At step 605, audio and video may be output. The video may be output using any of a variety of devices, such as display devices 206 described with respect to FIG. 2, capable of receiving video data and rendering output. Audio may be output using any of a variety of devices, such as speakers 214 as described with respect to FIG. 2, capable of receiving decoded audio data and outputting audio signals based on the decoded audio data.

At step 606, available environmental devices may be determined. A gateway, such as gateway 111 shown in FIG. 1, or any other computing device may determine which, if any, environmental devices are available to perform particular environmental actions. If a new device, such as a smart lightbulb or vibrating cushion, is installed in a room, the gateway may identify the new device and comprise the new environmental device in the set of available environmental devices. The environmental devices may be grouped into logical groupings based on any relevant criteria, such as physical location and/or actions that may be performed. Techniques that may be used to determine available environmental devices are described in more detail with respect to FIG. 7. A gateway and/or other computing device may maintain a database of available environmental devices. The database may comprise one or more profiles indicating user preferences for particular environmental devices. User preferences may comprise performing particular actions when the user is present. For example, a user preference may indicate that vibration effects should be output when the user is in the room. For example, a user preference may indicate that multicolor lighting actions should be performed when the user is present. User preferences may comprise not performing particular environmental actions when the user is present. For example, a user preference may indicate that actions having a flashing effect on a lighting device should not be output when the user is in the viewing area. For example, a user preference may indicate that actions which cause a seating surface to move should not be output when the user is sitting on the seating surface. User preferences may indicate modifications to particular actions. For example, a default action for a "severe lightning" event may comprise flashing white light and vibrating seats and a user preference may modify the light color to amber and/or disable the vibrating seats. For example, an action may indicate that an alarm device should output an alarm sound and a user preference may modify the action such that the user's mobile phone outputs an alarm.

At step 607, relevant actions may be determined based on the decoded environmental metadata. Relevant actions may be determined based on the particular environmental devices available. The gateway or other computing device may process environmental metadata and determine mappings of action subelements to the appropriate environmental device(s) available to perform the determined actions. The gateway or other computing device may ignore environmental metadata for which there is no device available to perform a relevant action. Multiple environmental devices may be mapped to a particular action. Relevant actions may be based on user preferences, such as an indication of user preferences stored in a database as described herein. For example, the default mapping for 'severe lightning' might comprise flashing white light and vibrating seats and a user may overwrite the light color to amber and/or disable the vibrating seats. An example mapping for a severe lightning may be represented as:

```
       <environmental_action="severe lightning">
             <action>
                    <device_type="light"/>
                    <color="white"/>
                    <duration="5ms"/>
             </action>
             <action>
                    <device_type="vibration"/>
                    <intensity="7"/>
                    <duration="1s"/>
             </action>
       </environmental_action>
```

User preference data may indicate particular actions that take precedence over the default mappings. An example user preference may be represented as:

```
       <user_preference>
             <environmental_action="severe lightning">
                    <action>
                           <device_type="light"/>
                           <color="amber"/>
                    </action>
             </environmental_action>
       </user_preference>
```

However, it should be noted that any mapping, such as a bit string or a data table, may be used for mapping environmental actions to environmental device. The filtering and/or modification of actions may be performed by the device performing the steps of FIG. 6 using techniques similar to those described with respect to FIG. 5.

A variety of environmental devices may be used by the gateway or other computing device to identify conditions within the physical environment. These conditions may provide context describing how to optimize and enhance the playback experience. For example, the location of the user (or a device, such as a mobile phone, associated with the user) within a room may change which lights flash or seats vibrate based on particular environmental actions. The user preferences may be utilized when the user is present in the room. The location of a user may be determined based on a computing device, such as a mobile phone, associated with the user being in communication with a gateway via any communication channel, such as Bluetooth or WiFi. The location of a user may be determined based on the types of environmental devices in communication with computing device associated with the user. For example, a user's mobile phone may communicate with a vibration-enabled sofa via NFC when the user sits on the couch. When the user gets up from the couch, the mobile phone may lose its NFC connection with the sofa, thereby indicating that the user is no longer sitting on the sofa. Location data indicating the location of particular environmental devices may be utilized to determine the location of the user. For example, if the location data indicates that the vibrating couch is located in the living room, when the user sits on the vibrating a couch a sensor may be triggered indicating that someone is sitting on the couch. It may be inferred that the user is co-located with the couch and is therefore in the living room. If the device associated with the user moves out range of communication with the gateway or other device (or if a sensor indicating the presence of a user indicates a user is no longer present), the environmental effects could be temporarily disabled. The environmental effects could be re-enabled when the user device re-establishes communication with the gateway and/or when the sensor indicates the presence of the user. Personal preferences for individual users, such as selecting different language streams or accessibility features, may also be indicated in the user preferences.

At step 608, commands may be provided to environmental devices. The commands may be provided by a network I/O device, such as network I/O device 210 shown in FIG. 2, and via a communication channel. The commands may cause one or more environmental actuators to perform one or more actions as specified in the relevant actions determined in step 607. A gateway or other computing device may send one or more commands to the environmental device(s) that cause the environmental device to perform the relevant action. For example, a command may be sent to a lighting device and indicate a color and intensity for the light to be output by the lighting device. For example, a command sent to a vibration device may indicate an intensity of the output and a duration for the output as specified in the relevant action. For example, a command sent to a fan device may indicate a fan speed setting and an indication to turn the fan device on. Gateways and other computing devices may be synchronized to coordinate multiple rooms and provide a common viewing experience in multiple locations viewing a particular piece of content. If a particular action utilizes particular environmental device(s) that are unavailable to the gateway, the gateway may skip sending commands corresponding to the unavailable environmental device(s). The environmental metadata may be synchronized with the video and/or audio such that the environmental devices are activated in concert with the output video and audio. The commands may comprise timing data indicating when the actions should be performed by the environmental device. The synchronization may be performed in time, such as by setting a common start time for each of the outputs and associating time offsets with particular actions such that a particular action is performed at the same moment in time as a corresponding portion of the video and/or audio is output. A gateway or other computing device may send commands to one or more environmental devices at a particular time such that the commands are pre-loaded on the environmental devices. The gateway or other computing device may send triggers to the environmental devices during specific times during the output of the audio and/or video to cause the environmental devices to perform the corresponding actions synchronized in time with particular events occurring in the audio and/or video being output.

At step 609, actions may be output. The actions may be output by an environmental device executing commands causing one or more environmental actuators to perform one or more actions. The direction of environmental actuators may be based on a command received by the environmental device. The direction of environmental actuators may be based on a timer and/or time offset. Timers and/or time offsets may be indicated by environmental timing data provided in a command and/or action. The output of the environmental actions may be synchronized with particular events and/or features within a segment of video and/or audio being output. For example, a lighting device may begin flashing blue and red 20 seconds after the start of output of a segment, as scene having a police car with flashing lights is being output. For example, a fan device may turn on 3 seconds after a previous action output during output of a segment, corresponding to a breeze picking up during a walk through a dark forest scene. The direction of environmental actuators may be based on a particular frame of video and/or audio cue being output by an output device. For example, a crack of a blue lightning bolt on the right front channel of an audio output device may correspond to the activation of a lighting device within the front of the room. For example, a vibrating seat may begin to increase its intensity of vibration as the intensity of crowd noise increases after a hit during a baseball game.

At step 610, it may be determined if supplemental content was received by the gateway or other computing device. If supplemental content was received, step 611 may be performed. At step 611, supplemental content may be output. The supplemental content may indicate a target computing device on which the supplemental content should be output and a notification to be output by the target computing device. For example, the supplemental content may cause a push notification to be displayed on a user's mobile device. For example, the supplemental content may cause a banner advertisement to be output on a device outputting video. For example, the supplemental content may cause a smart home device, such as an Amazon Echo or Google Home, to output an audio advertisement. The content of the output notification may be determined as described with respect to FIG. 5.

A gateway, such as the gateway 111 described with respect to FIG. 1, may be configured to for detect, enroll, and/or manage environmental devices and/or other computing devices. FIG. 7 is a flow chart showing an example method for determining available environmental devices. Steps of example method 700 may be performed by a gateway, such as gateway 111 described with respect to FIG. 1, and/or by one or more other computing devices.

At step 701, available communication channels may be determined. Any number of networking protocols may be used to communicate with environmental devices including G.hn, NFC, Wi-Fi, Wi-Fi Direct, LoRA and others. Near-field communication (NFC) devices and/or motion sensors may be used to provide detection and enrollment of environmental devices. Multiple devices may be utilized to communicate with environmental devices via a number of communication channels. For example, a smartphone connected via WiFi may be used as a bridge to actuate NFC devices, such as vibrating cushions. For example, a hub device may be able to communicate via Wi-Fi and control the operation of several sub-devices communicating with the hub device via a Zigbee wireless network.

At step 702, a gateway or other computing device may query a network to identify any environmental devices available via the communication channel(s). IP connected devices may be automatically detected and enrolled using standard protocols such as G.hn, IPv6 NN, WiFi Direct, IEEE 1905.11, and others. Querying the network may comprise receiving an indication of devices connected to the communication channel. The indication of devices may comprise any identifying information, such as a media access control address and/or an IP (or any other network) address. A manual query for devices may also be performed. For example, a computing device may receive user input (e.g., through a GUI running on a mobile device and/or computer in communication with gateway or other computing device) providing additional information regarding environmental devices. For example, the user interface may allow for the location of environmental devices to be identified within a room as described in more detail below. For example, environmental devices may use an access code and the user input may provide the access code so that the gateway or other computing device may communicate with the environmental device.

At step 703, it may be determined if one or more environmental devices are available via a communication channel. If environmental devices are not available, the process may end. If environmental devices are available, step 704 may be performed.

At step 704, the capabilities of the environmental devices may be determined. The gateway or other computing device may be query each of the detected devices and identify the potential actions able to be performed by the environmental devices. Information about the potential actions that may be performed by an environmental device may be provided in a standardized format. The potential actions may be classified according to the sensory experience corresponding to the output. For example, actions may be classified as tactile output (e.g., vibration and wind effects), secondary sound output (e.g., alarms and supplemental audio effects), secondary visual output (e.g., lighting actions, precipitation actions, mist actions, fog actions), motion output, thermal (e.g. temperature) output, olfactory output, and/or a taste output. The potential actions may be determined by receiving identifying information for an environmental device and querying a database to obtain an indication of actions that may be performed by the environmental device. The identifying information may comprise a media access control address, a label provided by a user, and/or any other data identifying the device. For example, a lighting device may be assigned the label "lighting device 1." For example, a lighting device may be assigned the label "office light" so that it can be easily determined that the lighting device controls lights in an office.

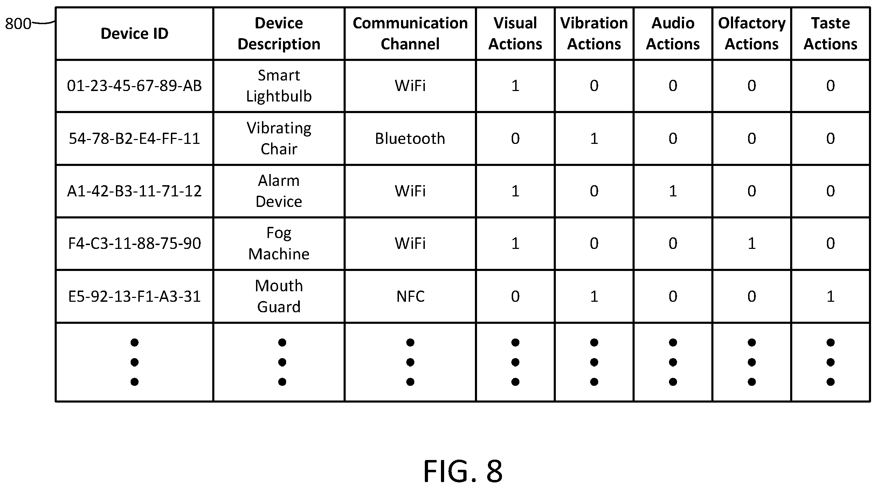

At step 705, available environmental device data may be generated. The gateway or other computing device may maintain a database of available environmental devices, the communication channel(s) by which the environmental devices may be triggered, and the actions that may be performed by the environmental devices. The database may also indicate a device type, identifying information, network addressing information, configurable parameters, and/or specific user profiles that may be associated with particular environmental devices. FIG. 8 shows an example data table 800 indicating capabilities of detected environmental devices. In data table 800, each row may correspond to a specific device and include an ID for the device (e.g., a MAC address), a description of the device, and an indication of the communication channel used by the device. For each of multiple categories of actions, the row may include an indication (e.g., "1") that the device supports output of that type of action or an indication (e.g., a "0") that the device does not support output of that type of action. As indicated by the vertical ellipses, data table 800 may include additional rows corresponding to other devices. Additional columns for additional types of actions and/or other information may be included, and/or one or more of the columns shown in FIG. 8 may be rearranged and/or omitted. The format shown in FIG. 8 is merely one example, and any data format, (e.g., bit strings, markup language) may be used for mapping environmental actions to environmental devices.

The database may also comprise an indication of the location of the environmental device within a room. A room may be modeled using a 3D coordinate system and the location may be an absolute position within the room represented using a x, y, z coordinate. A mobile device may be used to output a representation of the room and allow for various icons representing environmental devices (and other devices) to be placed within the room. For example, the location of non-environmental devices such as a display device, audio speakers, and a seating surface may be laid out within a room. Environmental devices such as a lighting device, ceiling fan, and alarm device may be defined relative to the non-environmental devices in the room. The coordinate system used may be arbitrary so as to capture the relative distance between devices and location of the devices within the room. The coordinate system may be mapped to the physical dimensions of the room so as to accurately reflect the specific location of devices and can be used to accurately measure distances between devices within the room. A mobile device may capture image data of the room and/or various devices within the room and use any of a variety of image processing techniques to measure the dimensions of the room and/or devices. The location of an environmental device may be described with respect to other devices and/or features of the room. For example, an environmental device may be located to the left of a display device. For example, an environmental device may be located behind a seating area. For example, an environmental device may be in the front right corner of the room.

## Claims

1. A method comprising:
determining, by a first computing device and based on a comparison of one or more features in a content item to a feature database, one or more events in the content item,
determining, based on one or more events in the content item, environmental metadata elements for controlling one or more environmental devices in association with output of the one or more events;
receiving (S501), from a requesting computing device, a request for the content item;
determining (S502) characteristics, of the requesting computing device, that indicate one or more environmental devices that are available at a premises associated with the requesting computing device;
determining (S504, S505), based on the request:
playback data for causing output of one or more segments of the content item;
and
one or more environmental metadata elements, of the environmental metadata elements, associated with the one or more segments;
filtering (S506), based on the characteristics, the one or more environmental metadata elements; and
sending (S509), by the first computing device to the requesting computing device;
the playback data; and
the filtered one or more environmental metadata elements.

2. The method of claim 1, wherein the playback data comprises audio data and/or video data for causing the output of one or more segments of the content item by one or more output devices.

3. The method of any one of claims 1 - 2, wherein the content item comprises a plurality of segments and wherein determining the environmental metadata elements comprises: determining, for each segment of the plurality of segments, one or more environmental metadata elements associated with the segment.

4. The method of any one of claims 1 - 3, wherein the environmental metadata elements comprise location data for a location relative to an output device used to output the content item.

5. The method of any one of claims 1 - 4, wherein the environmental metadata elements comprise data for causing the one or more environmental devices, separate from an output device used to output the content item, to provide at least one of tactile output, secondary sound output, secondary visual output, motion output, temperature output, or olfactory output.

6. The method of any of claims 1 -5, further comprising:
receiving, from a plurality of second computing devices located at a plurality of different premises, data indicating environmental devices that are available at the plurality of different premises.

7. The method of any one of claims 1 - 6, wherein:
the filtering comprises deleting, based on the characteristics indicating one or more environmental devices associated with the one or more environmental metadata elements being unavailable to the requesting computing device, one or more sub-elements of the one or more environmental metadata elements.

8. The method of any one of claims 1 - 7, further comprising determining one or more video features, of the one or more features, based on a histogram associated with the content item, and comparing the one or more video features to video features, in the feature database, associated with each of a plurality of visual event types.

9. The method of any one of claims 1 - 8, further comprising:
analyzing text associated with an audio portion of the content item; and
determining, based on the analyzing of the text, one or more additional events,
wherein the determining the environmental metadata elements is further based on the determined one or more additional events.

10. The method of any one of claims 1 - 9, further comprising:
transcoding data associated with the content item; and
determining the one or more features by analyzing data generated during the transcoding of video or audio.

11. The method of any one of the claims 1-10, further comprising:
determining, based on the environmental metadata elements, at least one supplemental content item; and
sending the determined at least one supplemental content item to the requesting computing device.

12. The method of claim 11, wherein the at least one supplemental content item comprises an advertisement.

13. A non-transitory computer-readable medium storing instructions that, when executed, cause performance of the method of any one of claims 1-12.

14. A computing device comprising:
one or more processors; and
memory storing instructions that, when executed by the one or more processors, cause the computing device to perform the method of any one of claims 1-12.

15. A system comprising:
a first computing device configured to perform the method of any one of claims 1-12; and
a requesting computing device configured to receive the playback data and the filtered one or more environmental metadata elements.

## Patentansprüche

1. Verfahren, umfassend:
Bestimmen, durch eine erste Rechenvorrichtung und auf Grundlage eines Vergleichs eines oder mehrerer Merkmale in einem Inhaltselement mit einer Merkmalsdatenbank, eines oder mehrerer Ereignisse in dem Inhaltselement ,
Bestimmen, auf Grundlage eines oder mehrerer Ereignisse in dem Inhaltselement, von Umfeldmetadatenelementen zum Steuern einer oder mehrerer Umfeldvorrichtungen in Verbindung mit der Ausgabe des einen oder mehrerer Ereignisse;
Empfangen (S501), von einer anfordernden Rechenvorrichtung, einer Anforderung des Inhaltselements;
Bestimmen (S502) von Eigenschaften der anfordernden Rechenvorrichtung, die auf eine oder mehrere Umfeldvorrichtungen hinweisen, die in einem der anfordernden Rechenvorrichtung zugeordneten Raum verfügbar sind;
Bestimmen (S504, S505), auf Grundlage der Anforderung, von:
Wiedergabedaten, um die Ausgabe eines oder mehrerer Segmente des Inhaltselements zu veranlassen; und
eines oder mehrere Umfeldmetadatenelemente der Umfeldmetadatenelemente, die dem einen oder mehreren Segmenten zugeordnet sind;
Filtern (S506), auf Grundlage der Eigenschaften, des einen oder mehrerer Umfeldmetadatenelemente; und
Senden (S509), durch die erste Rechenvorrichtung an die anfordernde Rechenvorrichtung:
der Wiedergabedaten; und
der gefilterten einen oder mehreren Umfeldmetadatenelemente.

2. Verfahren nach Patentanspruch 1, wobei die Wiedergabedaten Audiodaten und/oder Videodaten umfassen, um die Ausgabe von einem oder mehreren Segmenten des Inhaltselements durch eine oder mehrere Ausgabevorrichtungen zu veranlassen.

3. Verfahren nach einem der Patentansprüche 1 bis 2, wobei das Inhaltselement eine Mehrzahl an Segmenten umfasst und wobei das Bestimmen der Umfeldmetadatenelemente umfasst: das Bestimmen, für jedes Segment der Mehrzahl an Segmenten, eines oder mehrerer Umfeldmetadatenelemente, die dem Segment zugeordnet sind.

4. Verfahren nach einem der Patentansprüche 1 bis 3, wobei die Umfeldmetadatenelemente Positionsdaten für eine Position relativ zu einer Ausgabevorrichtung umfassen, die verwendet wird, um das Inhaltselement auszugeben.

5. Verfahren nach einem der Patentansprüche 1 bis 4, wobei die Umfeldmetadatenelemente Daten umfassen, um die eine oder mehrere Umfeldvorrichtungen, getrennt von einer zum Ausgeben des Inhaltselements verwendeten Ausgabevorrichtung, zu veranlassen, mindestens eine von einer taktilen Ausgabe, sekundären Audioausgabe, sekundären Videoausgabe, Bewegungsausgabe, Temperaturausgabe oder olfaktorischen Ausgabe bereitzustellen.

6. Verfahren nach einem der Patentansprüche 1 bis 5, ferner umfassend:
Empfangen, von einer Mehrzahl an zweiten Rechenvorrichtungen, die sich in einer Mehrzahl an verschiedenen Räumlichkeiten befinden, von Daten, auf Umfeldvorrichtungen hinweisen, die in der Mehrzahl an verschiedenen Räumlichkeiten verfügbar sind.

7. Verfahren nach einem der Patentansprüche 1 bis 6, wobei:
das Filtern das Löschen eines oder mehrerer Unterelemente eines oder mehrerer Umfeldmetadatenelemente auf Grundlage der Merkmale, die darauf hinweisen, dass eine oder mehrere Umfeldvorrichtungen, die dem einem oder mehreren Umfeldmetadatenelementen zugeordnet sind, der anfordernden Rechenvorrichtung nicht zur Verfügung stehen, umfasst.

8. Verfahren nach einem der Patentansprüche 1 bis 7, ferner umfassend das Bestimmen eines oder mehrerer Videomerkmale des einen oder mehrerer Merkmale, auf Grundlage eines Histogramms, das dem Inhaltselement zugeordnet ist, und das Vergleichen des einen oder mehrerer Videomerkmale mit Videomerkmalen in der Merkmalsdatenbank, die jedem von einer Mehrzahl an visuellen Ereignistypen zugeordnet sind.

9. Verfahren nach einem der Patentansprüche 1 bis 8, ferner umfassend:
Analysieren von Text, der einem Audioteil des Inhaltselements zugeordnet ist; und
Bestimmen, auf Grundlage des Analysierens des Texts, eines oder mehrerer zusätzlicher Ereignisse,
wobei das Bestimmen der Umfeldmetadatenelemente ferner auf den bestimmten einem oder mehreren zusätzlichen Ereignissen basiert.

10. Verfahren nach einem der Patentansprüche 1 bis 9, ferner umfassend:
Transcodieren von Daten, die dem Inhaltselement zugeordnet sind;
und
Bestimmen des einen oder mehrerer Merkmale durch Analysieren von Daten, die während des Transcodierens von Video oder Audio erzeugt werden.

11. Verfahren nach einem der Patentansprüche 1 bis 10, ferner umfassend:
Bestimmen, auf Grundlage der Umfeldmetadatenelemente, von wenigstens einem ergänzenden Inhaltselement; und
Senden des bestimmten wenigstens einen ergänzenden Inhaltselements an die anfordernde Rechenvorrichtung.

12. Verfahren nach Patentanspruch 11, wobei das wenigstens eine ergänzende Inhaltselement eine Werbung umfasst.

13. Nicht flüchtiges, rechnerlesbares Medium, das Anweisungen speichert, die, wenn sie ausgeführt werden, die Durchführung des Verfahrens nach einem der Patentansprüche 1 bis 12 veranlassen.

14. Rechenvorrichtung, umfassend:
einen oder mehrere Prozessoren; und
Speicher, der Anweisungen speichert, die, wenn sie von dem einen oder mehreren Prozessoren ausgeführt werden, die Rechenvorrichtung veranlassen, das Verfahren nach einem der Patentansprüche 1 bis 12 durchzuführen.

15. System, umfassend:
eine erste Rechenvorrichtung, dazu konfiguriert, das Verfahren nach einem der Patentansprüche 1 bis 12 durchzuführen; und
eine anfordernde Rechenvorrichtung, dazu konfiguriert, die Wiedergabedaten und die gefilterten eine oder mehreren Umfeldmetadatenelemente zu empfangen.

## Revendications

1. Procédé comprenant :
sur la base d'une comparaison d'une ou plusieurs caractéristiques dans un item de contenu avec une base de données de caractéristiques, la détermination, par un premier dispositif informatique, d'un ou plusieurs événements dans l'item de contenu,
sur la base d'un ou plusieurs événements dans l'item de contenu, la détermination d'éléments de métadonnées environnementales pour commander un ou plusieurs dispositifs environnementaux en association avec une sortie des un ou plusieurs événements ;
la réception (S501), en provenance d'un dispositif informatique demandeur, d'une demande de l'item de contenu ;
la détermination (S502) de caractéristiques du dispositif informatique demandeur qui indiquent un ou plusieurs dispositifs environnementaux disponibles dans des locaux associés au dispositif informatique demandeur ;
sur la base de la demande, la détermination (S504, S505) :
de données de lecture pour provoquer la sortie d'un ou plusieurs segments de l'item de contenu ; et
d'un ou plusieurs éléments de métadonnées environnementales des éléments de métadonnées environnementales associés aux un ou plusieurs segments ;
sur la base des caractéristiques, le filtrage (S506) des un ou plusieurs éléments de métadonnées environnementales ; et
par le premier dispositif informatique, l'envoi (S509) au dispositif informatique demandeur :
des données de lecture ; et
des un ou plusieurs éléments de métadonnées environnementales filtrés.

2. Procédé selon la revendication 1, dans lequel les données de lecture comprennent des données audio et/ou des données vidéo pour provoquer la sortie d'un ou plusieurs segments de l'item de contenu par un ou plusieurs dispositifs de sortie.

3. Procédé selon l'une des revendications 1 à 2, dans lequel l'item de contenu comprend une pluralité de segments, et dans lequel la détermination des éléments de métadonnées environnementales comprend : pour chaque segment de la pluralité de segments, la détermination d'un ou plusieurs éléments de métadonnées environnementales associés au segment.

4. Procédé selon l'une des revendications 1 à 3, dans lequel les éléments de métadonnées environnementales comprennent des données d'emplacement pour un emplacement par rapport à un dispositif de sortie utilisé pour délivrer en sortie l'item de contenu.

5. Procédé selon l'une des revendications 1 à 4, dans lequel les éléments de métadonnées environnementales comprennent des données pour amener les un ou plusieurs dispositifs environnementaux, distincts d'un dispositif de sortie utilisé pour délivrer en sortie l'item de contenu, à fournir au moins une parmi une sortie tactile, une sortie sonore secondaire, une sortie visuelle secondaire, une sortie de mouvement, une sortie de température ou une sortie olfactive.

6. Procédé selon l'une des revendications 1 à 5, comprenant en outre :
la réception, en provenance d'une pluralité de deuxièmes dispositifs informatiques situés dans une pluralité de locaux différents, de données indiquant des dispositifs environnementaux disponibles dans la pluralité de locaux différents.

7. Procédé selon l'une des revendications 1 à 6, dans lequel :
lorsque les caractéristiques indiquent qu'un ou plusieurs dispositifs environnementaux associés aux un ou plusieurs éléments de métadonnées environnementales ne sont pas disponibles pour le dispositif informatique demandeur, le filtrage comprend la suppression d'un ou plusieurs sous-éléments des un ou plusieurs éléments de métadonnées environnementales.

8. Procédé selon l'une des revendications 1 à 7, comprenant en outre la détermination d'une ou plusieurs caractéristiques vidéo des une ou plusieurs caractéristiques sur la base d'un histogramme associé à l'item de contenu, et la comparaison des une ou plusieurs caractéristiques vidéo à des caractéristiques vidéo dans la base de données de caractéristiques associées à chacun d'une pluralité de types d'événements visuels.

9. Procédé selon l'une des revendications 1 à 8, comprenant en outre :
l'analyse d'un texte associé à une partie audio de l'item de contenu ; et
sur la base de l'analyse du texte, la détermination d'un ou plusieurs événements supplémentaires,
dans lequel la détermination des éléments de métadonnées environnementales est en outre basée sur les un ou plusieurs événements supplémentaires déterminés.

10. Procédé selon l'une des revendications 1 à 9, comprenant en outre :
le transcodage de données associées à l'item de contenu ; et
la détermination des une ou plusieurs caractéristiques en analysant des données générées lors du transcodage d'une vidéo ou d'un audio.

11. Procédé selon l'une des revendications 1 à 10, comprenant en outre :
sur la base des éléments de métadonnées environnementales, la détermination d'au moins un item de contenu supplémentaire ; et
l'envoi de l'au moins un item de contenu supplémentaire déterminé au dispositif informatique demandeur.

12. Procédé selon la revendication 11, dans lequel l'au moins un item de contenu supplémentaire comprend une publicité.

13. Support non transitoire lisible par ordinateur stockant des instructions qui, lorsqu'elles sont exécutées, provoquent la mise en œuvre du procédé selon l'une des revendications 1 à 12.

14. Dispositif informatique comprenant :
un ou plusieurs processeurs ; et
une mémoire stockant des instructions qui, lorsqu'elles sont exécutées par les un ou plusieurs processeurs, amènent le dispositif informatique à mettre en œuvre le procédé selon l'une des revendications 1 à 12.

15. Système comprenant :
un premier dispositif informatique configuré pour mettre en œuvre le procédé selon l'une des revendications 1 à 12 ; et
un dispositif informatique demandeur configuré pour recevoir les données de lecture et les un ou plusieurs éléments de métadonnées environnementales filtrés.
